# EUROPÄISCHE PATENTSCHRIFT

(11) **EP 1 068 792 B1**
(45) Veröffentlichungstag und Bekanntmachung des Hinweises auf die Patenterteilung: **21.12.2005**
(21) Anmeldenummer: 00112977.4
(22) Anmeldetag: 21.06.2000
(51) Int. Cl.: A01F 12/44

(54) **Einrichtung zur Verstellung der Sieböffnungsweite an Mähdreschern**
Device for adjusting the width of the sieve openings of a combine harvester
Dispositif de réglage des ouvertures des grilles de nettoyage d'une moissonneuse-batteuse

(30) Priorität: 12.07.1999 DE 19931844
(43) Veröffentlichungstag der Anmeldung: 17.01.2001
(73) Patentinhaber: CLAAS Selbstfahrende Erntemaschinen GmbH, 33428 Harsewinkel (DE)
(72) Erfinder: Eggenhaus, Georg, 48346 Ostbevern (DE); Jeppe, Eckehard, 34369 Hofgeismar (DE); Strickmann, Dieter, 49176 Hilter (DE); Claes, Ulrich, 49201 Dissen (DE)

(56) Entgegenhaltungen:
- EP-A- 0 629 340
- EP-A- 0 682 860
- DE-A- 19 731 236
- US-A- 4 466 231

## Beschreibung

Die Erfindung betrifft eine Einrichtung zur Verstellung der Sieböffhungsweite an Mähdreschern entsprechend dem Oberbegriff des Anspruchs 1, sowie eine Verfahren ein Verfahren zur Justierung einer entsprechenden Einrichtung. In der Reinigungseinrichtung von Mähdreschern sind in der Regel mehrere Siebe nebeneinander beziehungsweise übereinander zur Reinigung des Erntegutes angeordnet. Im Betrieb der Einrichtung ist es für den optimalen Reinigungsgrad der Einrichtung notwendig, die Sieböffnungsweite an die zu reinigende Erntemenge und an die jeweilige Fruchtart anzupassen.

Es ist bekannt die Sieböffnungsweite von Lamellensieben bei Stillstand der Reinigungseinrichtung per Hand mittels Verstellhebel entsprechend den Reinigungsanforderungen einstellen zu können.
Aus dem deutschen Gebrauchsmuster DE-GM 7145564 ist es ferner bekannt, in ein Sieb oder in einen Siebrahmen eine elektromotorische Verstellung zur Verstellung der Sieböffnungsweite einzubauen. Die Verstelleinrichtung wird durch einen Elektromotor und eine nachgeschaltete Spindelverstellung gebildet. Der Elektromotor ist auf der gutaufnehmenden Seite der Reinigungseinrichtung angeordnet und mit seiner Motorwelle in der Bewegungsrichtung der Siebe ausgerichtet. Unter dem Mittelsteg eines Siebes ist vom Gutstrom geschützt eine Verstellstange angebracht, die einerends mittels eines Stellhebels an einer Verstellschiene angreift und andererends mit einem Gewinde versehen ist. An dem Gewinde greift ein axial fixiertes Stirnrad an, welches von dem Elektromotor je nach Verstellwunsch angetrieben wird. Die Verstellstange bewegt sich, je nach Drehrichtung des Motors, in oder entgegen der Bewegungsrichtung der Siebe. An der Verstellstange ist ferner eine Meßeinrichtung angebaut, mittels welcher die Sieböffnungsweite ermittelt und durch ein Anzeigegerät in der Fahrerkabine angezeigt wird. Der Maschinenbediener verstellt von der Fahrerkabine aus per Hand beziehungsweise mittels eines Schalters die Sieböffnungsweite so lange, bis von dem Anzeigegerät die gewünschte Öffnungsweite angezeigt wird.
Sämtliche rotierenden Teile der Verstellvorrichtung, wie Motorwelle, Stirnrad, Gewinde, Verstellstange und Meßeinrichtung sind in ihrer Betätigungsrichtung beziehungsweise mit ihrer Drehachse in Richtung der Bewegungsachse der Siebe angeordnet. Diese Anordnung wirkt sich nachteilig auf die Haltbarkeit der Siebverstellung und der Meßeinrichtung aus. Die durch die Schwingbewegung in den einzelnen Bauteilen auftretenden Massenträgheitskräfte fuhren zu einer axialen Bewegungen der einzelnen Elemente und erzeugen unnötigen Verschleiß in den Lager- und Führungsstellen. Dies führt zu einem frühzeitigen Ausfall der Verstell- beziehungsweise der Meßeinrichtung. Ein weiterer Nachteil dieser Einrichtung ergibt sich durch die Einbaulage des Verstellmotors mit nachgeschalteter Untersetzung. Diese befinden sich auf der gutaufnehmenden Seite der Siebe oberhalb des Gebläses und sind im eingebauten Zustand schwer erreichbar. Der Verstellantrieb und die elektrischen Verbindungen zu dem Motor und der Meßeinrichtung lassen sich für Wartungsarbeiten beziehungsweise für eine Demontage der Siebe nur mühsam erreichen.

Eine weitere automatische Verstellvorrichtung für Siebe ist beispielsweise aus dem DE-GM 9112209 bekannt. Ein Linearantrieb ist an einer Gehäusewand der Reinigungseinrichtung angebracht. Die Stellbewegung wird mittels Bowdenzügen durch die Seitenwand der Reinigungseinrichtung hindurch auf die Stellhebel der jeweiligen im Betrieb beweglichen Siebe übertragen. Durch die Bowdenzüge wird die Schwingbewegung von der elektromotorischen Verstellvorrichtung entkoppelt. Der Stellweg des Linearantriebs wird am Betätigungsglied des Linearantriebes gemessen und dient zur Ermittlung der Sieböffnungsweite.
Diese Verstellvorrichtung hat den Nachteil, daß der Verstellweg von dem Verstellantrieb bis zur Sieblamelle sehr lang ist und mehrere Koppelstellen besitzt. Hierdurch entsteht ein unvermeidbares, erhebliches Spiel auf dem gesamten Stellweg. Die Ermittlung der Sieböffnungsweite ist nur so lange ausreichend genau, wie das Spiel im mechanischen Aufbau der Verstellvorrichtung unverändert bleibt. Mit zunehmender Laufzeit der Verstellvorrichtung nimmt das Spiel der Verstellvorrichtung zu, so daß eine Verschlechterung der reproduzierbaren Siebeinstellung unabwendbar ist. Ein weiterer Nachteil entsteht durch den Aufbau der Verstellvorrichtung.

Vielfach werden die Siebe mindestens einmal pro Jahr für Kontroll- und Reinigungsaufgaben aus der Reinigungseinrichtung entfernt. Hierzu müssen dann die Verbindungen des Linearantriebes zu den Sieben unterbrochen werden. Die Bowdenzüge müssen von den Stellhebeln an den Sieben gelöst werden, welches einen erhöhten Demontageaufwand bedeutet und zusätzlich, durch die Trennung mindestens einer Koppelstelle, einen nicht nachvollziehbaren Einfluß auf das Spiel in Verstellvorrichtung hat. Die EP-A-0 682 860 zeigt ebenfalls eine gattungsgemäße Vorrichtung zur Herstellung der Sieböffnungsweite.

Die aus dem Stand der Technik bekannten Verstellvorrichtungen für Siebe in Mähdrescher erfüllen die Anforderungen an eine automatisierte Verstellung der Sieböffnungsweite in Bezug auf die Haltbarkeit beziehungsweise Funktionssicherheit und auf eine reproduzierbare Sieböffnungsweite nicht.

Es ist daher Aufgabe der Erfindung, die Verstellvorrichtung für Siebe in einer Reinigungseinrichtung an Mähdreschern dahingehend zu verbessern, daß die Verstellvorrichtung eine höhere Funktionssicherheit sowie eine bessere Reproduzierbarkeit der Sieböffnungsweite besitzt.

Die Aufgabe wird erfindungsgemäß durch eine Verstellvorrichtung mit den Merkmalen des Anspruchs 1 gelöst.

Die erfindungsgemäße Vorrichtung arbeitet mit einem an dem Siebrahmen angebrachten elektromotorischen Verstellantrieb, wodurch sich prinzipiell ein sehr kurzer Weg und nur wenige Koppelstellen zwischen dem Verstellantrieb und der Sieblamelle ergibt. Die Betätigungsrichtung des Antriebes ist so gewählt, daß sie sich von der Bewegungsrichtung der Siebe unterscheidet. Durch diese Anordnung ist es erstmalig gelungen, die Haltbarkeit und die Funktionssicherheit der Verstellvorrichtung endscheitend zu verlängern beziehungsweise zu erhöhen.
Um die auftretenden Massenträgkeitskräfte in der Reinigungseinrichtung minimal zu halten, ist es erforderlich alle schwingenden Bauteile der Reinigungseinrichtung möglichst leicht zu konstruieren. Selbiges gilt auch für den Verstellantrieb am Siebrahmen. Entgegen dieser Forderung muß der Antrieb für die erforderlichen Stellkräfte und Stellwege ausgelegt werden, was konstruktiv zu einer unvermeidlichen Masse des Antriebs führt. Die mit der größten Masse behafteten Elemente in einem Verstellantrieb sind die stillstehenden, kraftübertragenden Elemente, wie beispielsweise eine Kolbenstange in einem Drehspindelantrieb. Diese Kolbenstange ist einerends mit einem Innengewinde versehen, in welches eine Gewindestange eingreift. Die Steigung des Gewindes wird konstruktiv so gewählt, daß eine Selbsthemmung des Drehspindelantriebes gewährleistet ist. Zur Funktion des Antriebes ist ein minimales Spiel in dem Spindelgewinde notwendig. Die erfindungsgemäße Ausrichtung des Verstellantriebes hat den Vorteil, daß verhindert wird, daß dieses Spiel durch die Schwingbewegung der Reinigungseinrichtung zu Verschleiß in der Gewindeverbindung führt, da die Schwingrichtung der Siebe und die Betätigungsrichtung des Antriebes auf voneinander unterschiedlichen Achsen verlaufen.
Zur Verbesserung der Reproduzierbarkeit der Sieböffnungsweite, ist aus dem Stand der Technik bekannt, die Sieböffnungsweite anhand eines Verfahrens einzustellen. Eine neue Sieböffnungsweite wird vom Maschinenbediener von dem Fahrerstand des Mähdreschers aus vorgegeben. Die automatische, elektromotorische angetriebene Verstellvorrichtungen verstellt, bevor die neue gewünschte Sieböffnungsweite eingestellt wird, die Öffnungsweite des Siebes in eine Endlage (maximale oder minimale Öffnungsweite, welche anhand der gemessenen Stellung des Betätigungselementes des Verstellantriebes ermittelt wird). Danach wird von der angefahrenen Nullposition aus die neue Öffnungsweite selbsttätig eingestellt. Dabei wird bei der Ermittlung des erforderlichen Stellweges, ein einmalig bestimmtes Spiel der Verstellvorrichtung mitberücksichtigt, indem dem Stellweg des Verstellantriebes zu dem für die gewünschte Sieböffnungsweite erforderlichen, bekannten Stellweg zusätzlich einen zum ausgleichen des Spiels erforderlicher Stellweg hinzugefügt wird. Bei den bekannten Vorrichtungen ist das Spiel zum erforderlichen Stellweg relativ groß und nimmt außerdem mit zunehmender Anzahl der Verstellungen zu. Bei späteren Verstellungen müßte das Spiel erneut ermittelt werden und dies dann jeweils angepaßt berücksichtigt werden. Bei einer Verstellung der Sieböffnungsweite im Betrieb der Reinigungseinrichtung führt dieses Einstellverfahren zu einer kurzzeitigen völlig falschen Siebweiteneinstellung. Dabei wird ein unnötiger Verlust von Erntegut erzeugt. Durch die erfindungsgemäße Vorrichtung kann vorteilhaft auf ein Einstellverfahren verzichtet werden. Da die erfindungsgemäße Anordnung der Betätigungsrichtung des Verstellantriebs nur dem aus den Verstellungen herrührenden geringen Verschleiß unterliegt, muß nur ein einmalig ermitteltes, gegenüber den bekannten Verstellvorichtungen relativ geringes Spiel, bei der Ermittlung des erforderlichen Stellweges berücksichtig werden. Die erfindungsgemäße Verstellvorrichtung gewährleistet somit auch nach einer größeren Anzahl von Verstellungen eine ausreichend genaue, reproduzierbare Einstellung der Sieböffnungsweite.

In einer weiteren Ausgestaltung der Erfindung werden sämtliche Drehachsen von rotierenden Bauteilen der Verstellvorrichtung, auf einer von der Schwingrichtung der Siebe abweichenden Achse angeordnet. Die Verstellvorrichtung wird von einem Elektromotor und einem eventuell nachgeschalteten Getriebe, mit rotierenden Bauteilen, angetrieben. Es hat sich für die Haltbarkeit der Verstellvorrichtung als besonders vorteilhaft erwiesen, auch diese Achsen auf einer von der Schwingrichtung der Siebe abweichenden Achse anzuordnen. Verschleiß an den einzelnen Wellenenden und den einzelnen Lagerstellen durch die Schwingbewegung der Reinigungseinrichtung können so vorteilhaft vermindert und bei einer zur Schwingrichtung der Siebe senkrechten Ausrichtung sogar ausgeschaltete werden.

Eine besondere erfindungsgemäße Ausgestaltung der Verstellvorrichtung ergibt sich durch die Ausrichtung der Betätigungsrichtung des elektromotorischen Verstellantriebs beziehungsweise sämtlicher rotierender Bauteile der Verstellvorrichtung, zumindest bei einer eingestellten Sieböffnungsweite, senkrecht zur Bewegungsrichtung der Siebe. Durch diese vorteilhafte Anordnung werden die einzelnen beweglichen und rotierenden Elemente der Verstellvorrichtung nicht, durch die Schwingbewegung, in ihrer Betätigungsrichtung beziehungsweise in ihrer Drehachsenrichtung, zu einer Bewegung angeregt. Die Schwingbewegung verursacht bei dieser Anordnung der Elemente keinen Verschleiß in den Lager und in den entsprechenden Führungselementen, da die Massenträgheitskräfte von den Lagern beziehungsweise von den jeweiligen Führungselementen, ohne eine Bewegung des jeweiligen Bauteils zu verursachen, aufgenommen werden. Diese Anordnung ist ferner besonders vorteilhaft für die Anlenkung des Betätigungsgliedes des Verstellantriebes an die nachfolgende Verstellvorrichtung. Die Reinigungseinrichtung besitzt in der Regel zwei auf einer Ebene nebeneinander angeordnete Siebe mit je einem Umlenkhebel zur Einstellung der Sieböffnungsweite. Die beiden Umlenkhebel sind mittels einer senkrecht zur Schwingbewegung ausgerichteten Verbindungsstange verbunden, so daß die Bewegung dieser Stange, auf einer senkrecht zur Schwingbewegung verlaufenden Achse, eine gleichsinnige Verstellung der Sieböffnungsweite des jeweiligen Siebes ermöglicht. Durch die vorteilhafte, erfindungsgemäße Anordnung des Verstellantriebes, senkrecht beziehungsweise annähernd senkrecht zur Schwingrichtung der Siebe, läßt sich in einfacher Weise die Stellbewegung des Verstellantriebes auf die weitere Verstellvorrichtung mittels einer einfachen Verbindung übertragen.
In einer weiteren Ausgestaltung der Erfindung wird der elektromotorische Verstellantrieb durch einen Linearantrieb gebildet. Diese zeichnen sich in der erfindungsgemäße Anordnung durch eine besonders hohe Funktionssicherheit und Haltbarkeit aus. Vorteilhaft ist bei diesem Antrieb, daß alle rotierenden Bauteile in einem Gehäuse, geschützt von Verunreinigungen, angeordnet sind.

Ein weiterer Vorteil der Linearantriebe besteht darin, daß die Betätigungsrichtung des Stellelementes, welches in der Regel als eine Kolbenstange ausgebildet ist, gradlinig verläuft. Somit ist vorhersehbar und gewährleistet, daß in einer entsprechenden, erfindungsgemäßen Anordnung bei jeder einstellbaren Sieböffnungsweite die Betätigungsrichtung des Linearantriebes auf einer von der Schwingrichtung der Siebe abweichenden Achse liegt. Die Verwendung eines Linearantriebes besitzt gegenüber anderen bekannten, elektrischen Verstellantrieben, durch ihre in der Regel ähnlich eines hydraulischen Hubzylinders geformten Bauform, einen weiteren Vorteil. Die Abmessungen sind ähnlich der des Siebrahmes. Daher läßt sich der Liniearmotor besonders gut an den Siebrahmen in einer Reinigungseinrichtung anbringen, ohne das der Reinigungsprozeß gestört wird oder zusätzlicher Wartungs- beziehungsweise Reinigungsaufwand für die Verstellvorrichtung anfällt.
Durch die erfindungsgemäße vorteilhafte Ausrichtung der Betätigungsrichtung des Verstellantriebes, wird es in einer weiteren Ausgestaltung der Erfindung ermöglicht, ein mit geringem Verschleiß behaftetes Wegmeßsystem in den Verstellantrieb zu integrieren. Das Wegmeßsystem wird kostengünstig, durch eine entlang des Stellweges des Verstellantriebes verlaufendes lineares Wegmeßsystem ausgeführt, indem beispielsweise ein elektrischer Widerstand in Form einer Widerstandsfläche parallel zu einer Kolbenstange angeordnet wird und ein von der Kolbenstange angetriebener Schleifkontakt einen Widerstandswert von dieser Widerstandsfläche abgreift. Die Meßeinrichtung läßt sich vorteilhaft in dem Gehäuse eines Verstellantriebes wie beispielsweise eines Linearantriebes vor Verschmutzung geschützt anordnen. Durch diese vorteilhafte Ausrichtung wird der Schleiferkontakt von der Schwingbewegung der Siebe in seiner Bewegungsrichtung nur schwach und bei einer senkrecht zur Schwingrichtung der Siebe angeordneter Ausrichtung der Widerstandsfläche nicht zu einer verschleißerzeugenden Schwingbewegung angeregt.

Für eine bessere Haltbarkeit und Funktionssicherheit der Verstellvorrichtung, hat sich mit großem Erfolg der Einsatz eines bürstenlosen Elektromotors erwiesen. An diesem Motor entfallen die mit ihren Bewegungsrichtung senkrecht zur Drehachse der Motorwelle angeordneten Bürsten. Wie zuvor beschrieben, ist es besonders vorteilhaft auch die Motorwelle auf einer von der Bewegungsrichtung der Siebe abweichenden Achse anzuordnen. Bei optimaler, senkrecht zur Bewegungsrichtung angeordneter Motorwelle, befinden sich die Bürsten mit ihrer Bewegungsrichtung unweigerlich in Schwingrichtung der Siebe. Dies würde zu einem verstärktem Verschleiß derselben und zu einem vorzeitigen Ausfall der Verstellvorrichtung führen. Durch die erfindungsgemäße Verwendung eines bürstenlosen Motors in dem Verstellantrieb, kann die Motorwelle vorteilhaft angeordnet und gleichzeitig die Funktionssicherheit endscheitend erhöht werden.

In einer weiteren Ausgestaltung der Erfindung ist es erfindungsgemäß vorgesehen, die Verstellvorrichtung im Bereich der die abgesiebten Verunreinigungen abgebenden Seite des Siebes anzuordnen. Durch diese Anordnung ist eine gute Zugänglichkeit zur Vorrichtung sichergestellt. Die Siebe können von dieser Siebseite aus zur Kontrolle eingesehen und für Wartungs- und Reinigungszwecke aus dem Mähdrescher entnommen werden. Die Verstellvorrichtung kann somit auf einfache Weise gleichzeitig mit den Sieben überprüft beziehungsweise der Verstellantrieb an- oder abgebaut werden.

Zur Überprüfung und Justierung der Sieböffnungsweite beziehungsweise der Verstellvorrichtung ist erfindungsgemäß an mindestens einer Sieblamelle beziehungsweise Sieblamellenreihe mindestens eine Einrichtung vorhanden, die auf mindestens eine Sieböffnungsweite anspricht. Durch diese Einrichtung kann erstmalig die tatsächliche Sieböffnungsweite überwacht und außerdem die Verstellvorrichtung auf ein im Verstellantrieb integriertes Wegmeßsystem justiert werden. Diese Einrichtung kann eine einfacher Schaltkontakt sein, der direkt von einer Sieblamelle in beispielsweise einer Endlage der Lamelle betätigt wird. Eine bestimmte Sieböffnungsweite kann ferner mittels eines Drehgebers oder eines Schaltkontaktes direkt von der Stellung der Betätigungs- und Drehachse einer Sieblamellenreihe abgeleitet werden.
Die zuvor beschriebene Vorrichtung kann erfindungsgemäß anhand eines Verfahrens justiert werden. Während des Justiervorgangs wird die Sieböffnungsweite so lange in eine Richtung verstellt, bis eine Einrichtung mindestens eine dieser Einrichtung zugeordnete bekannte Sieböffnungsweite anzeigt und anschließend wird die bekannte Sieböffnungsweite, dem momentan ermittelten Meßwert der, über den gesamten Stellweg messenden Einrichtung, zugeordnet. Durch dieses Verfahren ist es erstmalig möglich, die tatsächliche Sieböffnungsweite dem Wegmeßsystem automatisch zuordnen zu können. Für die Erstmontage der Verstellvorrichtung beziehungsweise der Siebe und auch für weitere Montagen kann auf eine fehlerbehaftete Handjustage verzichtet werden. Desweiteren können nach der Justage, im späteren Betrieb, Schäden an der Verstellvorrichtung oder zunehmendes Spiel in der Vorrichtung, durch einen Vergleich der bei der Justage ermittelten Meßwerte mit den im Betrieb der Vorrichtung auftretenden Meßwerte, erkannt werden.

Die Erfindung wird anhand der nachfolgenden Zeichnungen näher erläutert.
Es zeigt:
- Fig. 1: eine schematische Seitenansicht der Dresch- und Reinigungseinrichtungen in einem Mähdrescher,
- Fig. 2: eine Draufsicht auf eine Anordnung der Verstellvorrichtung an einer Reinigungseinrichtung,
- Fig. 3: die Anordnung der rotierenden Bauteile in einem Verstellantrieb,
- Fig. 4: die Seitenansicht eines Lamellensiebes mit einer am Förderende des Siebes angeordneter Verstellvorrichtung und
- Fig. 5: ein Lamellensieb mit angeordneten Einrichtungen zur Anzeige mindestens einer Sieböffnungsweite.

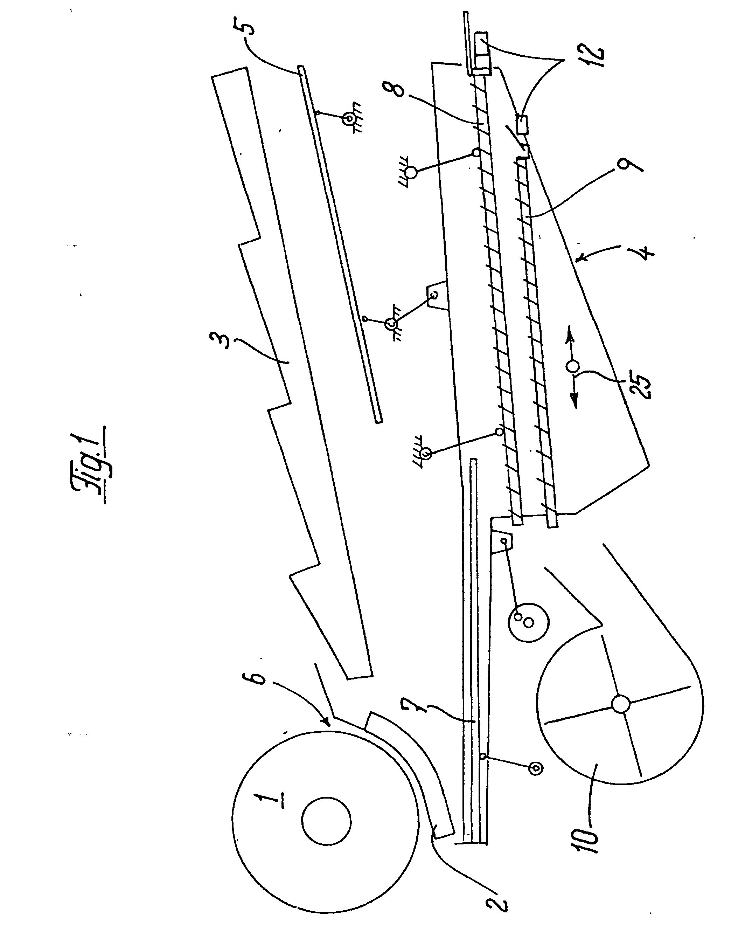

In Figur 1 wird eine schematische Seitenansicht der Dresch- und Reinigungseinrichtungen in einem Mähdrescher dargestellt. Mittels der Dreschtrommel 1 und dem darunter angeordneten Dreschkorb 2 wird das Erntegut in seine Bestandteile Korn, Stroh und Spreu getrennt. Das Stroh wird über die Schüttler 3 oberhalb der Reinigungseinrichtung 4 weitergefördert. Dabei werden die noch im Stroh befindlichen Körner abgeschieden und gelangen über den Rücklaufboden 5 zu der Reinigungseinrichtung 4. Das von der Drescheinrichtung 6 abgeschiedene Korn und die Streu fallen durch den Dreschkorb 2 direkt auf den Vorbereitungsboden 7 und werden mittels einer Schwingbewegung zur Reinigungseinrichtung 4 weitergefördert.
Die Reinigungseinrichtung 4 wird durch eine Gebläse 10 und mindestens einem Sieb 8 oder 9 gebildet. In der Regel sind, wie dargestellt, ein Obersieb 8 und ein Untersieb 9 übereinander, angeordnet, welches sich jeweils in zwei in einer Ebene liegende Teilsiebe aufteilt. Mittels eines Gebläses 10 werden die Siebe 8, 9 von unten mit einen Luftstrom beaufschlagt. Die Siebe 8, 9 selbst vollführen während des Betriebes der Reinigungseinrichtung 4 eine Schwingung derart, daß das von der Drescheinrichtung 6 und den Schüttler 3 abgetrennte Erntegut von der der Drescheinrichtung 6 zugewandte Seite der Siebe aufgenommen und entgegen der Fahrtrichtung des Mähdreschers weitergefördert wird. Zur Erzielung des optimalen Reinigungsgrades der Reinigungseinrichtung 4 kann die Gebläsedrehzahl und die Öffnungsweite der Siebe 8, 9 verändert werden. Erfindungsgemäß sind den Sieben 8, 9 jeweils ein Verstellantrieb 12 zur Verstellung der Sieböffnungsweite zugeordnet.

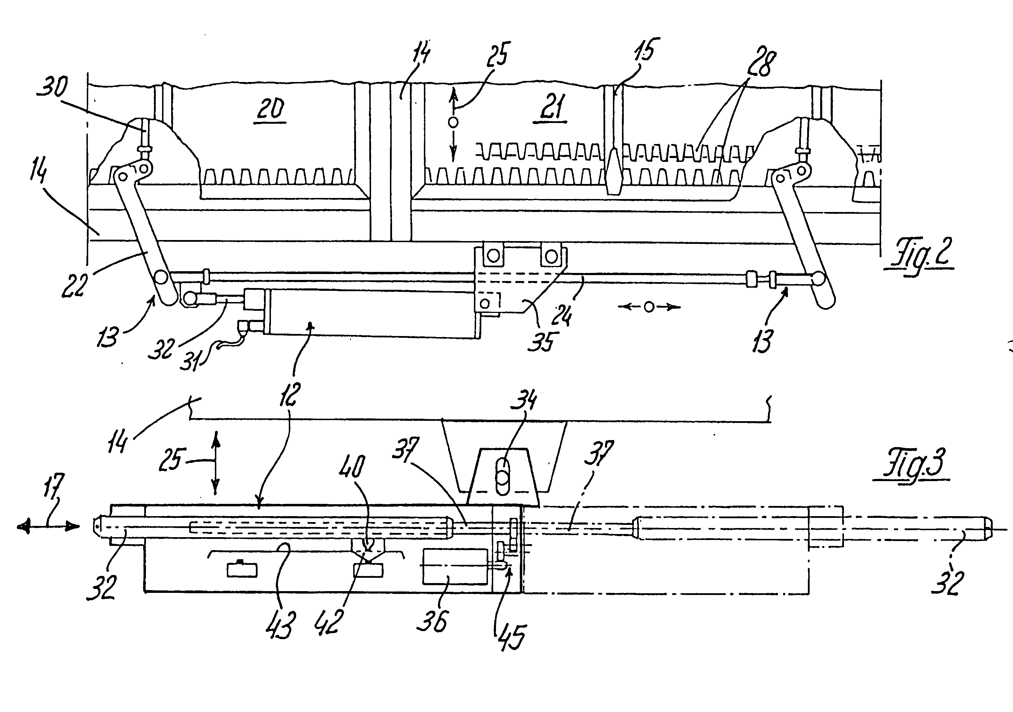

Figur 2 zeigt eine Draufsicht auf eine Anordnung der Verstellvorrichtung 13 an einer Reinigungseinrichtung 4 entsprechend der Figur 1. Der Verstellantrieb 12 ist so an einem Siebrahmen 14 angeordnet, daß die Betätigungsrichtung 17 annähernd senkrecht zur Schwingrichtung 25 der Siebe ist. Dargestellt ist das Obersieb 8, welches sich aus zwei auf einer Ebene angeordnete Teilsiebe 20, 21 zusammensetzt. Die Öffnungsweite der schematisch dargestellten Sieblamellenreihen 28 kann mittels der Stange 30, dem Umlenkhebel 22 und der Verbindungsstange 24 eingestellt werden. Die Kolbenstange 32 des Verstellantriebs 12 greift an der Verbindungsstange 24 an, so daß die Öffnungsweite der beiden Teilsiebe 20, 21 durch einen Verstellantrieb 12 gleichsinnig verstellt werden kann. Der Verstellantrieb 12 stützt sich gelenkig über den Halter 35 direkt an dem Siebrahmen 14 ab. Über eine flexible, mehradrige, elektrische Leitung 31, welche an dem Siebrahmen 14 in einer Kabelrinne verlegt ist, wird der Verstellantrieb gesteuert sowie die ermittelte Sieböffnungsweite der Steuerung rückgemeldet beziehungsweise dem Bediener in der Fahrerkabine angezeigt. Besonders geeignet ist die direkte Anbindung der Verstellvorrichtung an ein in dem Mähdrescher vorhandenes Daten- Bussystem. Hierdurch läßt sich die Anzahl der Adern der Leitung 31 und dadurch die mitschwingende Leitungsmasse reduzieren.

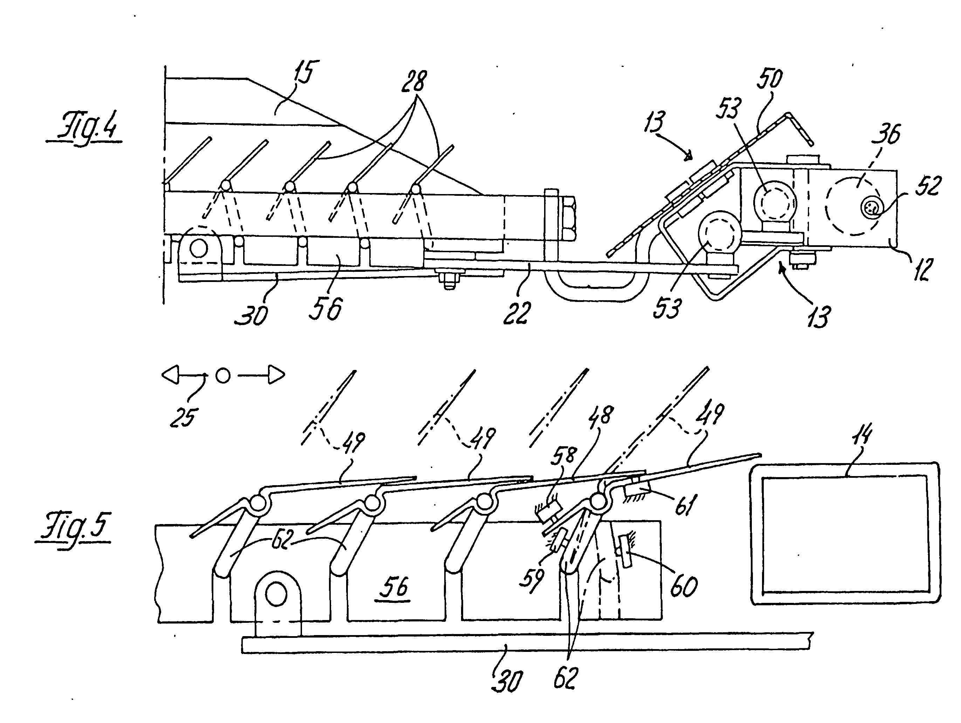

In der Figur 3 ist die Durchdringung des Verstellantriebs 12 in Form eines Linearantriebs dargestellt. Alle rotierenden Bauelemente, wie die Gewindespindel 37, die Motorwelle und die Wellen im Untersetzungsgetriebe 45 sind achsparallel angeordnet. Die Bewegungsrichtung der Kolbenstange 32 ist außerdem mit der Ausrichtung der Drehachsen der rotierenden Bauelementen identisch, so daß die Ausrichtung aller rotierenden Bauelemente des Verstellantriebs 12, auf einer von der Schwingrichtung 25 der Siebe 8, 9 abweichenden Achse, durch einen entsprechende Ausrichtung der Kolbenstange 32 gegeben ist. Parallel zur Kolbenstange 32 ist eine elektrische Widerstandsfläche 43 angeordnet. Mit der Bewegung der Kolbenstange 32 geht auch ein Schleifer 40 und eine Schaltnocke 42 einher. Der Schleifer 40 kontaktiert mit der Widerstandsfläche 43 und verändert den meßbaren Widerstandswert in Abhängigkeit des Stellweges der Kolbenstange 32. Die Schaltnocke 40 ist so ausgerichtet, daß sie in den zuläßigen Endlagen der Kolbenstange 32 jeweils einen Schaltkontakt 41 betätigt. Durch diese kann die Ausrichtung der Widerstandsfläche 43 zur Position der Kolbenstange 32 erkannt und automatisch zugeordnet werden. Ferner kann der bürstenlose Elektromotor 36 vor dem erreichen des jeweiligen Endanschlages der Kolbenstange 32 abgeschaltet und so eine Beschädigung des Verstellantriebes verhindert werden.
In dieser Figur 3 ist durch Stichpunktlinien beispielhaft eine weitere Ausführungsform des Verstellantriebes 12 dargestellt. Der erweiterte Verstellantrieb 12 besitzt eine weitere Kolbenstange, die mittels einer verlängerten Gewindespindel 37 mit der Kolbenstange 32 gekoppelt angetrieben wird, so daß der erweiterte Verstellantrieb 12 anstelle der Verbindungsstange 24 eingesetzt werden kann. Durch diese Ausführungsform kann sichergestellt werden, daß bei jeder Sieböffnungsweite die Betätigungsrichtung 17 des Verstellantriebes 12 senkrecht zur Schwingrichtung 25 der Siebe 8, 9 verläuft. Die Abstandsänderung des Verstellantriebs 12 vom Siebrahmen 14, welche durch die Bewegung der Umlenkhebel 22 entsteht, wird durch die Befestigung des erweiterten Verstellantriebs 12 in einem Langloch 34 am Verstellantrieb 12 ausgeglichen. Zur Einstellung unterschiedlicher Sieböfmungsweiten an den Teilsieben 20, 21 einer Siebebene, kann der erweiterte Verstellantrieb 12 auch mit zwei unabhängig angetriebenen, getrennten Gewindespinden 37 doppelt ausgeführt sein.
Figur 4 zeigt eine Seitenansicht eines Lamellensiebes 9 im Längsschnitt, mit einer am Förderende der Siebe angeordneten Verstellvorrichtung 13. In Verlängerung des Untersiebes 9 ist ein Windleitblech 50 angeordnet, unter welchem der Verstellantrieb 12 vor Verunreinigungen geschützt angebracht ist und gleichzeitig in dieser Einbaulage die Funktion der Reinigungseinrichtung 4 nicht behindert. Mittels der vierpoligen Steckverbindung 52 ist der Verstellantrieb 12 mit der Spannungsversorgung des Mähdreschers und außerdem mit dem Bussystem der Maschine schnell lösbar verbunden. In dem rechteckförmigen Gehäuse des Verstellantriebes 12 ist eine Auswerte- und Steuerschaltung untergebracht, welche die notwendigen Steuer-, Meß- und Justiersignale der Verstellvorrichtung aufarbeitet, auswertet, speichert und bei Bedarf in für das verwendete Bussystem konforme Daten umwandelt. Die Stellbewegung des Verstellantriebes 12 wird über nicht dargestellte Stangen und über die beiden Kugelgelenke 53 auf den Umlenkhebel 22 übertragen. Der Umlenkhebel 22 greift an die Stange 30 an, welche wiederum die Verstellschiene 56 betätigt. Die Verstellschiene 56 ist kammartig ausgebildet und greift unterhalb des Mittelsteges 15 in die unterhalb des Mittelsteges 15 senkrecht zur Verstellschiene 56 verlaufenden kurbelartig ausgebildeten Sieblamellendrehachsen ein. Eine Bewegung der Verstellschiene 56 bewirkt eine direkte Veränderung der Öffnungsweite des Siebes 9.

In Figur 5 wird ein Lamellensieb mit an einer Sieblamelle 49 angeordneten Einrichtungen 58, 59, 60, 61 zur Erkennung und Anzeige mindestens einer Stellung einer Sieblamelle 49 dargestellt. Durch die rückwärtige Verlängerung der Sieblamelle 49, durch die kurbelartige Sieblamellendrehachse 62 unterhalb des Mittelsteges 15 oder durch eine benachbarte Sieblamelle 48 wird mindestens einer Einrichtung 58, 59, 60, 61, im einfachsten Fall ein Schaltkontakt, bei einer bekannten Sieböffnungsweite betätigt. Dadurch ist es möglich, das Wegmeßsystem 42, 43 in dem Verstellantrieb 12 automatisch auf eine oder mehrere bekannte Sieböffnungsweite zu justieren. Ausgehend von dieser ermittelten Justierposition (minimale, maximale oder eine anderen bekannten Siebweite) kann dann eine exakte Einstellung weiterer Sieböffnungsweiten erfolgen. Zur automatischen Justage ist es lediglich notwendig nur eine der dargestellten Einrichtungen 58, 59, 60, 61 an dem Sieb anzubringen. Besonders Vorteilhaft ist die Anbringung der Einrichtung an den Positionen 59 oder 60, da sich diese Anbringungspositionen, vom Gutstrom geschützt, unterhalb des Mittelstege 15 befinden. Zur Verdeutlichung des möglichen, gesamten Verstellbereichs der Sieblamellen 48, 49, ist durch Strichpunktlinien die Stellung der Sieblamellen bei maximaler Sieböffnungsweite dargestellt.

## Patentansprüche

1. Vorrichtung an einem Mähdrescher zur Verstellung der Sieböffnungsweite von mindestens einem in einer Reinigungseinrichtung angeordneten Sieb (8, 9), wobei das Sieb im Betrieb der Einrichtung eine Schwingbewegung ausführt, von einem Luftstrom von unten in Förderrichtung durchströmt wird und mit mindestens einem mitschwingenden, elektromotorischen Verstellantrieb (12) ausgestattet ist, der eine Kolbenstange (32) aufweist,
**dadurch gekennzeichnet, dass**
die Betätigungsrichtung (17) der Kolbenstange (32) des elektromotorischen Verstellantriebs (12) auf einer, von der Schwingungsrichtung (25) der Siebe (8, 9) abweichenden Achse verläuft

2. Vorrichtung nach Anspruch 1
**dadurch gekennzeichnet,daß**
sämtliche Drehachsen von rotierenden Bauteilen des Verstellantriebs (12) auf einer, von der Schwingungsrichtung (25) der Siebe (8, 9) abweichenden Achse angeordnet sind.

3. Vorrichtung nach mindestens einem der Ansprüche 1 und 2,
**dadurch gekennzeichnet, daß**
die Betätigungsrichtung 17 des elektromotorischen Verstellantriebs beziehungsweise die Ausrichtung der rotierenden Bauteile des Verstellantriebs (12) zumindest bei einer eingestellten Sieböffnungsweite, senkrecht zur Bewegungsrichtung der Siebe (8, 9) angeordnet sind.

4. Vorrichtung nach mindestens einem der Ansprüche 1 bis 3,
**dadurch gekennzeichnet,daß**
der elektromotorische Verstellantrieb (12) ein Linearantrieb ist.

5. Vorrichtung nach mindestens einem der Ansprüche 1 bis 4,
**dadurch gekennzeichnet, daß**
der Verstellantrieb (12) mit einem integrierten Wegmeßsystem ausgestattet ist.

6. Vorrichtung nach mindestens einem der Ansprüche 1 bis 5
**dadurch gekennzeichnet, daß**
die Verstellvorrichtung von einem bürstenlosen Elektromotor angetrieben wird.

7. Vorrichtung nach mindestens einem der Ansprüche 1 bis 6,
**dadurch gekennzeichnet, daß**
die Vorrichtung im Bereich der die abgesiebten Verunreinigungen abgebenden Seite des Siebes angeordnet ist.

8. Vorrichtung nach mindestens einem der Ansprüche 1 bis 7,
**dadurch gekennzeichnet, daß**
an mindestens einer Sieblamelle (49) beziehungsweise einer Sieblamellenreihe mindestens eine Einrichtung vorhanden ist, die auf mindestens eine bekannte Sieböffnungsweite anspricht.

9. Verfahren zur Justierung einer Vorrichtung nach Anspruch 5,
**dadurch gekennzeichnet, dass**
während eines Justiervorgangs der Verstellantrieb (12) die Sieböffnungsweite so lange in eine Richtung verstellt, bis eine Einrichtung (58, 59, 60, 61) mindestens eine dieser Einrichtung (58, 59, 60,61) zugeordneten Sieböffnungsweite anzeigt und dass anschließend die bekannte Sieböffnungsweite einem momentan gemessenen Messwert zugeordnet wird, der von einer über den gesamten Stellweg der Kolbenstange (32) messenden Einrichtung ermittelt wird.

## Claims

1. Apparatus on a combine harvester for adjusting the sieve opening width of at least one sieve (8, 9) arranged in a cleaning device, wherein in operation of the device the sieve performs an oscillating movement, has an air flow flowing therethrough from below in the conveyor direction and is equipped with at least one electric-motor adjusting drive (12) which also oscillates therewith and which has a piston rod (32),
**characterised in that** the actuating direction (17) of the piston rod (32) of the electric-motor adjusting drive (12) is on an axis which differs from the oscillation direction (25) of the sieves (8, 9).

2. Apparatus according to claim 1 **characterised in that** all axes of rotation of rotating components of the adjusting drive (12) are arranged on an axis which differs from the oscillation direction (25) of the sieves (8, 9).

3. Apparatus according to at least one of claims 1 and 2 **characterised in that** the actuating direction (17) of the electric-motor adjusting drive or the orientation of the rotating components of the adjusting drive (12) are arranged in perpendicular relationship to the direction of movement of the sieves (8, 9) at least at a set sieve opening width.

4. Apparatus according to at least one of claims 1 to 3 **characterised in that** the electric-motor adjusting drive (12) is a linear drive.

5. Apparatus according to at least one of claims 1 to 4 **characterised in that** the adjusting drive (12) is provided with an integrated travel measuring system.

6. Apparatus according to at least one of claims 1 to 5 **characterised in that** the adjusting apparatus is driven by a brushless electric motor.

7. Apparatus according to at least one of claims 1 to 6 **characterised in that** the apparatus is arranged in the region of the side of the sieve, which discharges the sieved-off contaminating materials.

8. Apparatus according to at least one of claims 1 to 7 **characterised in that** at at least one sieve slat (49) or a row of sieve slats there is a device which is responsive to at least one known sieve opening width.

9. A method of adjusting an apparatus according to claim 5
**characterised in that**
during an adjusting operation the adjusting drive (12) adjusts the sieve opening width in a direction until a device (58, 59, 60, 61) displays at least one sieve opening width associated with said device (58, 59, 60, 61) and that then the known sieve opening width is associated with a presently measured measurement value which is ascertained by a device for measuring over the entire adjusting travel of the piston rod (32).

## Revendications

1. Dispositif sur une moissonneuse-batteuse pour régler la largeur d'ouverture de grille d'au moins une grille (8, 9) disposée dans un dispositif de nettoyage, la grille effectuant un mouvement oscillant lors du fonctionnement du dispositif, étant traversée par un courant d'air par-dessous dans la direction de déplacement et étant équipée d'au moins une commande de déplacement électromotorisée cooscillante (12), laquelle comporte une tige de piston (32), **caractérisé en ce que** la direction d'actionnement (17) de la tige de piston (32) de la commande de déplacement électromotorisée (12) coïncide avec un axe qui ne correspond pas à la direction d'oscillation (25) des grilles (8, 9).

2. Dispositif selon la revendication 1, **caractérisé en ce que** tous les axes de rotation des composants rotatifs de la commande de déplacement (12) coïncident avec un axe qui ne correspond pas à la direction d'oscillation (25) des grilles (8, 9).

3. Dispositif selon au moins une des revendications 1 et 2, **caractérisé en ce que**, au moins en présence d'une largeur d'ouverture de grille réglée, la direction d'actionnement (17) de la commande de déplacement électromotorisée, respectivement l'orientation des composants rotatifs de la commande de déplacement (12), sont perpendiculaires à la direction de déplacement des grilles (8, 9).

4. Dispositif selon au moins une des revendications 1 à 3, **caractérisé en ce que** la commande de déplacement électromotorisée (12) est une commande linéaire.

5. Dispositif selon au moins une des revendications 1 à 4, **caractérisé en ce que** la commande de déplacement (12) est équipée d'un système intégré de mesure de course.

6. Dispositif selon au moins une des revendications 1 à 5, **caractérisé en ce que** le dispositif de déplacement est entraîné par un moteur électrique sans balais.

7. Dispositif selon au moins une des revendications 1 à 6, **caractérisé en ce que** le dispositif est disposé dans la zone du côté de la grille qui évacue les impuretés tamisées.

8. Dispositif selon au moins une des revendications 1 à 7, **caractérisé en ce que** sur au moins une lamelle de grille (49), respectivement une rangée de lamelles de grille, se trouve au moins un dispositif qui réagit à au moins une largeur d'ouverture de grille connue.

9. Procédé pour ajuster un dispositif selon la revendication 5, **caractérisé en ce que**, pendant une opération d'ajustage, la commande de déplacement (12) règle la largeur d'ouverture de grille dans une direction jusqu'à ce qu'un dispositif (58, 59, 60, 61) indique au moins une largeur d'ouverture de grille associée à ce dispositif (58, 59, 60, 61), et **en ce que** la largeur d'ouverture de grille connue est ensuite associée à une valeur de mesure mesurée instantanément, laquelle est recueillie par un dispositif effectuant une mesure sur toute la course de déplacement de la tige de piston (32).
